Europäisches Patentamt

European Patent Office

Office européen des brevets

(19)

(11) **EP 1 555 782 A2**

(12) **EUROPEAN PATENT APPLICATION**

(43) Date of publication:
**20.07.2005 Bulletin 2005/29**

(51) Int Cl.7: **H04L 25/02**

(21) Application number: **05000621.2**

(22) Date of filing: **13.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **15.01.2004 KR 2004003060**

(71) Applicants:
• **Samsung Electronics Co., Ltd.**
  **Suwon-si, Gyeonggi-do (KR)**
• **Seoul National University Industry Foundation Seoul (KR)**

(72) Inventors:
• **Moon, June**
  **Gwanak-gu Seoul (KR)**
• **Lee, Yong-Hwan**
  **Gwanak-gu Seoul (KR)**
• **Yu, Hyun-Seok**
  **Yeongtong-gu Suwon-si Gyeonggi-do (KR)**

(74) Representative: **Grünecker, Kinkeldey, Stockmair & Schwanhäusser Anwaltssozietät**
  **Maximilianstrasse 58**
  **80538 München (DE)**

(54) **A method for designing an uplink pilot signal and a method and a system for estimating a channel in a multicarrier code division multiple access system**

(57)     A channel estimating method in a wireless communication system in which a plurality of MSs communicate with a BS on multiple carriers. Each of the MSs transmits to the BS a pilot signal designed to have simultaneous time-domain and frequency-domain responses. The BS is synchronized to the MS using the received pilot signal and performs channel estimation for the MS.

FIG.1

**Description**

The present invention relates generally to a mobile communication system, and in particular, to a method for designing a pilot signal for simultaneously supporting synchronization and channel estimation in a multicarrier code division multiple access (MC-CDMA) system.

The future-generation mobile communication system requires high-speed high-quality data transmission for the provisioning of various multimedia services with an improved quality. To satisfy this demand, studies are being actively conducted on the MC-CDMA system.

A MC-CDMA system is based on CDMA and multicarrier technology such as orthogonal frequency division multiplexing (OFDM).

In OFDM, data is transmitted on narrow-band sub-carriers which are mutually orthogonal, thereby reducing performance degradation which may occur due to frequency selective fading encountered in a wideband transmission. The OFDM also overcomes the problem of multipath fading-caused inter-symbol interference (ISI) by inserting a guard interval (GI).

COMA identifies users by orthogonal spreading codes. Thus, COMA has an advantage in terms of the system capacity over the frequency division multiple access (FDMA) or the time division multiple access (TDMA) systems.

According to a multicarrier transmission scheme such as the OFDM, for synchronization, a receiver recovers timing using pilot symbols or using a cyclic prefix (CP) inserted to remove the delay spread of a multipath channel.

The initial synchronization acquisition is very significant in a communication system. Especially since a multicarrier-based communication system is sensitive to timing errors, a synchronization technique with excellent performance is essential. However, if the multiple access interference (MAI) caused by signals from multiple users is great, a pilot signal or a GI is often distorted. As a result, the reliability of the synchronization acquisition is decreased.

Also, channel estimation is required to compensate for the time-varying channel characteristics in the mobile communication system. A pilot signal is used for the channel estimation. MC-CDMA has limitations in applications of uplink transmission under complex propagation conditions, albeit it is accepted as a suitable technology for downlink transmission. In other words, since signals from a plurality of mobile stations (MSs) are received under different channel transfer functions, pilot-based channel estimation is difficult. In addition, different velocities of the mobile stations and different distances between MSs and a base station (BS) make uplink synchronization difficult.

While a technique of designing a pilot signal using an orthogonal code for uplink channel estimation was proposed in Korea Patent Application 2001-0058248, it has a shortcoming in that the use of an additional pilot signal for channel estimation decreases band efficiency.

The present invention is to substantially solve at least the above problems and/or disadvantages and to provide at least the advantages below.

Accordingly, it is the object of the present invention to provide a method of designing an uplink pilot signal by inserting in the time domain a code having a good correlation characteristic and in the frequency domain an orthogonal code, in order to simultaneously support timing synchronization and channel estimation.

This object is solved by the subject matter of the independent claims.

Preferred embodiments are defined in the dependent claims.

An aspect of the present invention is to provide a pilot signal designing method for simultaneously enabling stable synchronization and channel estimation in a MC-CDMA uplink transmission at a high MAI power level from multiple users.

A further aspect of the present invention is to provide a method of designing a pilot signal that simultaneously enables timing synchronization and channel estimation such that the pilot-caused decrease of band efficiency is minimized.

The above object and aspects are achieved by providing a channel estimating method in a wireless communication system in which a plurality of MSs communicate with a BS on multiple carriers. Each of the MSs transmits to the BS a pilot signal designed to simultaneously have predetermined time-domain and frequency-domain responses. The BS is synchronized to the MS using the received pilot signal and performs channel estimation for the MS. The pilot signal includes a sync code and a channel characteristic code in a time domain. The channel characteristic code is determined according to the frequency characteristics. The pilot signal includes a spreading code and a dependent code which is not related to the channel estimation, in a frequency domain. The sync code and the channel characteristic code are orthogonal codes such as Gold codes or Walsh codes. The spreading code and the dependent code in the frequency domain are determined by the channel characteristic code in the time domain. The channel characteristic code is formed such that the signal-to-interference and noise ratio (SINR) of the spreading code in the frequency domain is maximized according to the signal-to-noise ratio (SNR) of a given environment.

According to another aspect of the present invention, in a pilot signal designing method in a wireless communication system in which a plurality of MSs communicate with a BS on multiple carriers, a pilot signal is designed to simultaneously have predetermined time-domain and frequency-domain responses.

According to a third aspect of the present invention, in a receiver in a BS that estimates a channel for each of a plurality of MSs using the pilot signals received from the MSs in an MC-CDMA system, a plurality of correlators separate a pilot signal for each of the MSs, a maximum value detector feeds back to an MS corresponding to the highest value the highest of the outputs of the correlators as the timing information, and a channel estimator estimates a channel for each of the MSs by despreading the pilot signal. The correlators are matched filters or active correlators. The channel estimator despreads the pilot signal by a combining technique, for channel estimation.

The above and other objects, features and advantages of the present invention will become more apparent from the following detailed description when taken in conjunction with the accompanying drawings in which:

FIG. 1 illustrates the structure of a pilot signal in the time domain, which is designed according to a preferred embodiment of the present invention;

FIG. 2 illustrates the structure of the pilot signal in the frequency domain, which is designed according to the preferred embodiment of the present invention;

FIG. 3 is a flowchart illustrating an operation for detecting an error-reflecting weight that maximizes the signal-to-interference and noise ratio (SINR) of a pilot signal when a channel characteristic code is designed using a weighted least squares method;

FIG. 4 is a block diagram of a BS receiver for acquiring timing using a pilot signal according to the preferred embodiment of the present invention; and

FIG. 5 is a block diagram of a despreader for performing channel estimation for each user in the BS receiver illustrated in FIG. 4.

A preferred embodiment of the present invention will be described herein below with reference to the accompanying drawings. In the following description, well-known functions or constructions are not described in detail since they would obscure the invention in unnecessary detail.

According to the present invention, an MC-CDMA uplink pilot signal is designed in such a manner that it includes a sync code in the time domain and enables channel estimation for each user in the frequency domain.

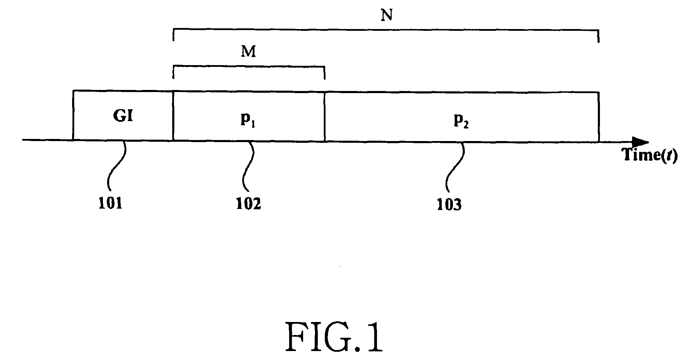

FIG. 1 illustrates the time-domain structure of a pilot signal designed according to a preferred embodiment of the present invention.

Referring to FIG. 1, a pilot signal is formed of a GI 101 for removing delay spread, a sync code ($p_1$) 102 for timing synchronization, and a channel characteristic code ($p_2$) 103 designed by taking into consideration the frequency characteristics. The pilot signal having N samples except for the GI 101 is expressed as Equation 1:

$$p = \begin{pmatrix} p_1 \\ p_2 \end{pmatrix}$$

$$. . . . . (1)$$

where the elements of the pilot vector, $p_1$ and $p_2$ are set forth in Equations 2 and 3:

$$p_1 = [p[0],\, p[1],\, p[2], \cdots, p[M-2],\, p[M-1]]^T \tag{2}$$

$$p_2 = [p[M],,\, p[M+1],\, p[M+2], \cdots,\, p[N-2],\, p[N-1]]^T \tag{3}$$

As the sync code $p_1$, a code having a good cross correlation characteristic is used, such as a Gold code or an orthogonal Gold code, in order to provide robustness against interference from other users.

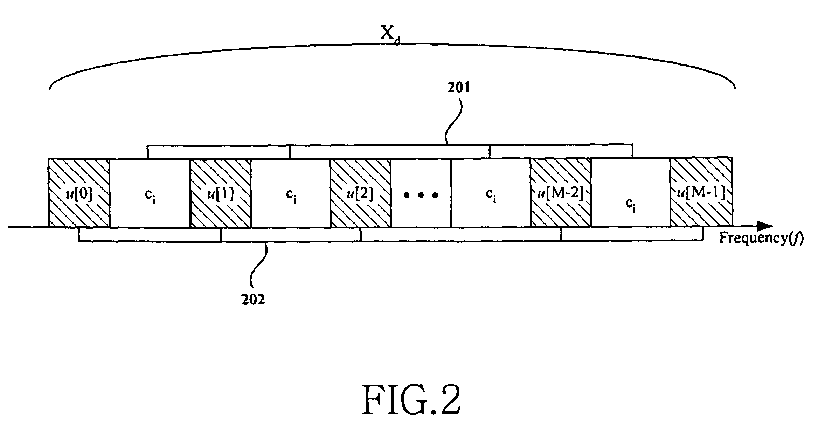

FIG. 2 illustrates the frequency-domain structure of the pilot signal according to the preferred embodiment of the present invention.

Referring to FIG. 2, in the frequency domain, the pilot signal is formed of an orthogonal spreading code 201 and a dependent code 202 which is not related to the channel estimation. A desired frequency response $X_d$ required for the pilot signal is determined by Equation 4:

$$X_d = (u[0],\, c_i,\, u[1],\, c_i,\, u[2], \cdots,\, c_i,\, u[M-1]) \tag{4}$$

The spreading code 201 of length N, $C_{spi}$ created by concatenating an orthogonal spreading code $c_i$ of $X_d$ L times and the dependent code 202, u are given as follows in Equations 5 and 6:

$$c_{sp_i} = (c[0], c[1], c[2], \cdots, c[N - M - 1])$$
$$= (c_1, c_i, c_i, \cdots, c_i)$$

$$\cdots \cdots (5)$$

and

$$u = (u[0], \ u[1], \ u[2], \cdots, u[M - 1]) = 0 \qquad (5)$$

$c_i$ is an orthogonal code assigned to an ith user such as a Gold code or a Walsh code. Since u preferably has no energy, the desired frequency response can be a vector of 0.

Now a description will be made of designing the channel characteristic code $p_2$ such that the frequency response $X_d$ of the entire pilot signal in the frequency domain is an orthogonal code as illustrated in FIG. 2.

From Equation 1 and Equation 4, Equation 7 is set forth as follows:

$$D\begin{pmatrix} p_1 \\ p_2 \end{pmatrix} = Dp = X_d$$

$$\cdots \cdots (7)$$

where D is a discrete time Fourier transform (DFT) matrix given as in Equation 8:

$$D = \begin{bmatrix} 1 & 1 & 1 & \cdots & 1 \\ 1 & e^{-j\frac{2\pi}{N}} & e^{-j\frac{4\pi}{N}} & \cdots & e^{-j\frac{2(N-1)\pi}{N}} \\ 1 & e^{-j\frac{4\pi}{N}} & e^{-j\frac{8\pi}{N}} & \cdots & e^{-j\frac{4(N-1)\pi}{N}} \\ \vdots & \vdots & \vdots & \ddots & \vdots \\ 1 & e^{-j\frac{2(N-1)\pi}{N}} & e^{-j\frac{4(N-1)\pi}{N}} & \cdots & e^{-j\frac{2(N-1)(N-1)\pi}{N}} \end{bmatrix}$$

$$\cdots \cdots (8)$$

The DFT matrix D is divided into an (NxM) matrix, $D_1$ and an (Nx(N-M)) matrix, $D_2$, in Equation 9:

$$D = (D_1 | D_2) \qquad (9)$$

By substituting Equation 9 into Equation 7, Equation 10 is given:

$$(D_1 \mid D_2)\begin{pmatrix} p_1 \\ p_2 \end{pmatrix} = D_1 p_1 + D_2 p_2 = X_d$$

$$\cdots \cdots (10)$$

which is reduced to Equation 11:

$$D_2 p_2 = X_d - D_1 p_1 \qquad (11)$$

Here,

$$D_1 = \begin{bmatrix}
1 & 1 & 1 & \cdots & 1 \\
1 & e^{-j\frac{2\pi}{N}} & e^{-j\frac{4\pi}{N}} & \cdots & e^{-j\frac{2(N-1)\pi}{N}} \\
1 & e^{-j\frac{4\pi}{N}} & e^{-j\frac{8\pi}{N}} & \cdots & e^{-j\frac{4(N-1)\pi}{N}} \\
\vdots & \vdots & \vdots & \ddots & \vdots \\
1 & e^{-j\frac{2(N-1)\pi}{N}} & e^{-j\frac{4(N-1)\pi}{N}} & \cdots & e^{-j\frac{2(N-1)(N-1)\pi}{N}}
\end{bmatrix}$$

$$D_2 = \begin{bmatrix}
1 & 1 & 1 & \cdots & 1 \\
e^{-j\frac{2\pi}{N}} & e^{-j\frac{2(M+1)\pi}{N}} & e^{-j\frac{2(M+2)\pi}{N}} & \cdots & e^{-j\frac{2(N-1)\pi}{N}} \\
e^{-j\frac{4M\pi}{N}} & e^{-j\frac{4(M+1)\pi}{N}} & e^{-j\frac{4(M+2)\pi}{N}} & \cdots & e^{-j\frac{4(N-1)\pi}{N}} \\
\vdots & \vdots & \vdots & \ddots & \vdots \\
e^{-j\frac{2(N-1)M\pi}{N}} & e^{-j\frac{2(N-1)(M+1)\pi}{N}} & e^{-j\frac{4(N-1)(M+2)\pi}{N}} & \cdots & e^{-j\frac{2(N-1)(N-1)\pi}{N}}
\end{bmatrix}$$

Equation 11 is an overdetermined equation. Using a least squares method for minimizing the difference between $D_p$ and $X_d$, a mean square error (MSE), the channel characteristic code $p_2$ can be achieved.
By the least squares method, hence, the channel characteristic code $p_2$ is computed by the following in Equation 12:

$$p_2 = (D_2^T D_2)^{-1} D_2^T (X_d - D_1 p_1) \qquad (12)$$

According to a weighted least squares method of minimizing the total error calculated by applying different error-reflecting weights to the errors of the orthogonal spreading code $c_1$ and the non-designed dependent code u and summing the resulting values, the channel characteristic code $p_2$ is computed by the following in Equation 13:

$$p_2 = (D_2^T W^T W D_2)^{-1} (D_2^T W^T W (X_d - D_1 p_1)) \qquad (13)$$

W in Equation 13 is a weight matrix represented as Equation 14:

$$W = \begin{bmatrix} w_1 & 0 & 0 & \cdots & 0 \\ 0 & w_2 & 0 & \cdots & 0 \\ 0 & 0 & w_2 & \cdots & 0 \\ \vdots & \vdots & \vdots & \ddots & \vdots \\ 0 & 0 & 0 & \cdots & w_1 \end{bmatrix}$$

$$\cdots \cdots (14)$$

where $w_1$ and $w_2$ are the error-reflected weights for $c_1$ and u. For a ratio between the error-reflected weights, $r_w = w_1/w_2$, if $r_w$ increases, power leakage is reduced in u, but distortion becomes severe in $c_1$. If $r_w$ decreases, the opposite is observed. That is, when the decrease of the distortion of the spreading code reduces interference power between users, the power leakage increases. Considering that the pilot designing in the frequency domain aims to maximize the SINR of a signal used for channel estimation, $r_w$ that maximizes the SINR ($SINR_{CE}$) of the pilot signal for channel estimation must be selected with respect to a given signal-to-noise ratio (SNR) under a given environment. Therefore, if the SNR is given as Equation 15:

$$SNR = 10 \log 10 \left( \frac{P}{\sigma_i^2} \right) (dB)$$

$$\cdots \cdots (15)$$

then, in Equation 16:

$$SINR_{CE} = 10 \log 10 \left( \frac{P - P_l}{\sigma_n^2 + \sigma_i^2} \right) (dB)$$

$$\cdots \cdots (16)$$

where P is pilot symbol power, $P_1$ is the power loss of don't-care points, $\sigma_n^2$ is noise power, and $\sigma_i^2$ is code interference power. As noted from Equation 16, as $P_1$ and $\sigma_i^2$ vary with $r_w$, $SINR_{CE}$ is also changed.

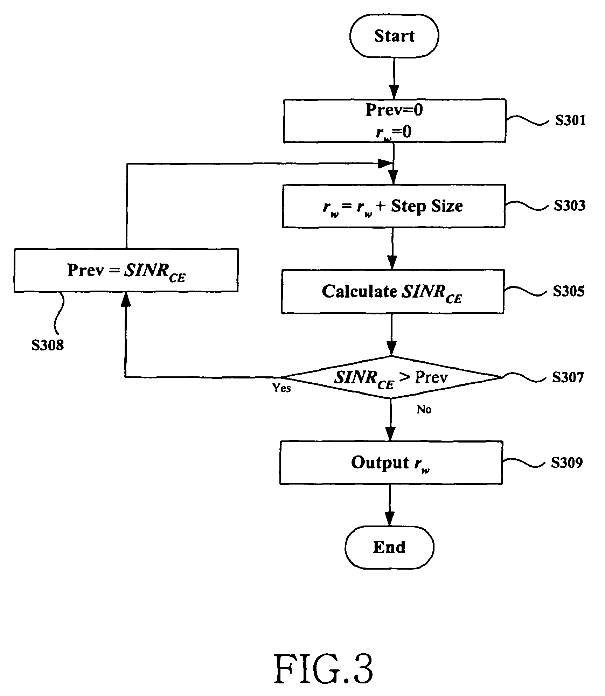

FIG. 3 is a flowchart illustrating an operation for detecting a rough value $r_w$ that maximizes the $SINR_{CE}$. In accordance with the present invention, once the SNR is determined, an $r_w$ that maximizes the $SINR_{CE}$ is detected, while incrementing $r_w$ by a step size at each iteration. Because the $SINR_{CE}$ increases with the $r_w$ which increases from 0, the $r_w$ has a maximum the $SINR_{CE}$ at a point where $SINR_{CE}$ starts to drop.

Referring to FIG. 3, given an SNR, a Prev and a $r_w$ are set to their initial values 0 in step S301. Prev denotes the maximum $SINR_{CE}$. $r_w$ is incremented by a step size in step S303 and the $SINR_{CE}$ is calculated according to the incremented $r_w$ by Equation (16) in step S305. If the current $SINR_{CE}$ is greater than the Prev in step S307, the current $SINR_{CE}$ is set to the Prev in step S308. Then, $r_w$ is again incremented by one step size in step S303. After repeating steps S303 to S307, if the current $SINR_{CE}$ is equal to or less than the Prev in step S307, the current $r_w$ is output in step S309.

A BS performs timing acquisition and channel estimation using the pilot signal designed in an MS in the above-described method.

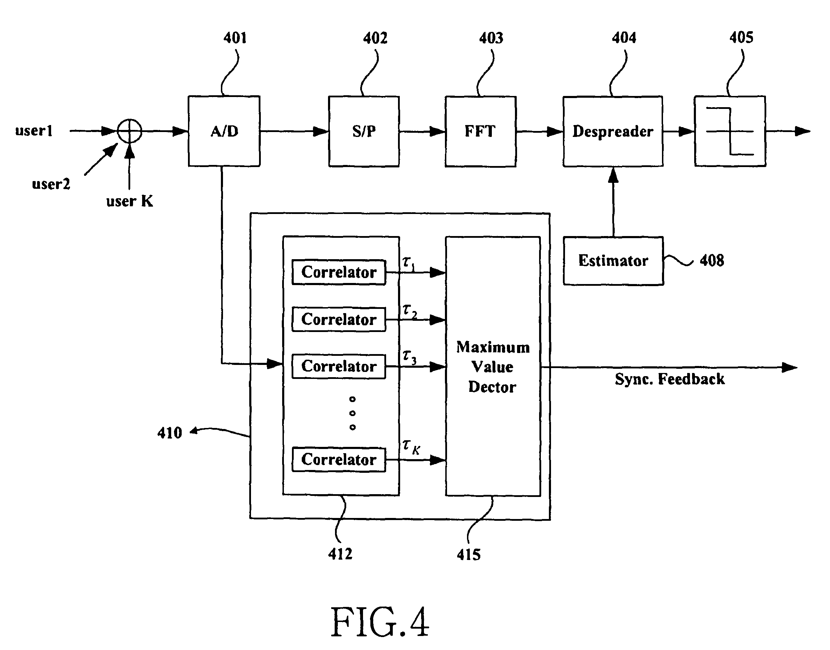

FIG. 4 is a block diagram of a BS receiver for performing timing acquisition using the pilot signal according to the preferred embodiment of the present invention.

Referring to FIG. 4, the BS receiver includes an analog-to-digital (A/D) converter 401 for converting an analog signal, received through an antenna, to a digital signal, a serial-to-parallel (S/P) converter 402 for converting the digital signal to parallel signals, a fast Fourier transformer (FFT) 403 for fast-Fourier-transforming the parallel signals, a despreader 404 for despreading the FFT signals, a detector 405 for recovering a transmission signal from the despread signals using a channel estimate calculated using the pilot signal in a channel estimator 408, and a synchronization acquirer 410 for acquiring synchronization using the pilot signal.

For the despreading operation, a combining technique is used such as equal gain combining (EGC), maximum ratio combining (MRC), or minimum mean square error combining (MMSE).

The synchronization acquirer 410 includes a correlation unit 412 for detecting the timing error of each user by correlating the output of the A/D converter 401 with a sync code, and a maximum value detector 415 for feeding back the highest of the outputs of the correlation unit 412 to a corresponding user terminal.

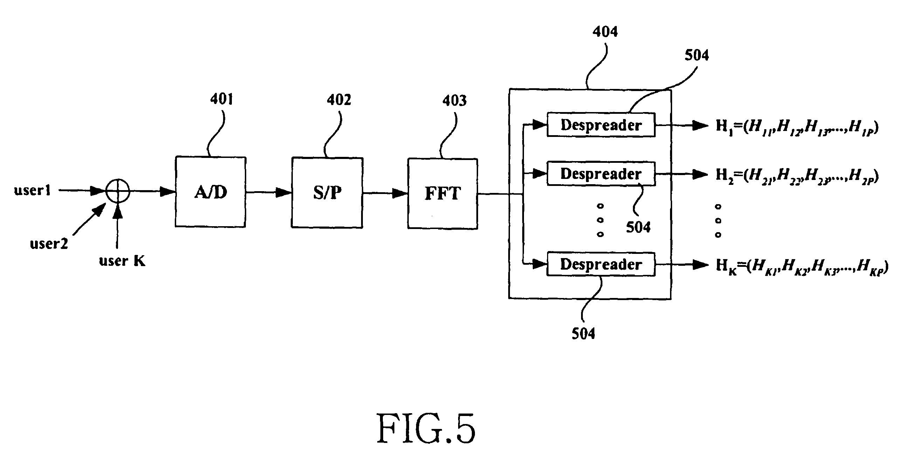

The despreader 404 preferably has a plurality of despreading modules 504, each for multiplying a received signal by a user-specific spreading code because it must identify a user signal for despreading, as illustrated in FIG. 5.

Referring to FIG. 5, since each user signal is spread with an orthogonal code, each despreading module 504 despreads the user signal by a corresponding spreading code to thereby estimate a channel for each user.

In accordance with the present invention, an uplink pilot signal is designed by inserting a code having a good correlation characteristic and an orthogonal code respectively in the time domain and in the frequency domain. Thus, timing acquisition and channel estimation can be carried out simultaneously. The pilot signal designed according to the present invention enables stable synchronization and channel estimation simultaneously in MC-CDMA uplink transmission at a high MAI power level from multiple users. Furthermore, the design of the pilot signal to support timing synchronization and channel estimation simultaneously minimizes a pilot-caused band efficiency decrease.

While the pilot signal designing method has been shown and described along with the structure of the BS receiver with reference to a certain preferred embodiment thereof, it will be understood by those skilled in the art that various changes in form and details may be made therein without departing from the scope of the invention as defined by the appended claims.

**Claims**

1. A channel estimating method in a wireless communication system in which a plurality of MSs communicate with a BS on multiple carriers, comprising the steps of:

   transmitting by each of the MSs a pilot signal to the BS, the pilot signal being designed to have simultaneous time-domain and frequency-domain responses; and
   synchronizing to the MS using the received pilot signal and performing channel estimation for the MS by the BS.

2. The channel estimating method of claim 1, wherein the pilot signal includes a synchronization code and a channel characteristic code in a time domain, the channel characteristic code being determined according to frequency characteristics.

3. The channel estimating method of claim 2, wherein the synchronization code is an orthogonal code.

4. The channel estimating method of claim 2, wherein the synchronization code is one of a Gold code and a Walsh code.

5. The channel estimating method of one of claims 1 to 4, wherein the pilot signal includes a spreading code and a dependent code which is not related to channel estimation, in a frequency domain.

6. The channel estimating method of claim 5, wherein the spreading code is an orthogonal code.

7. The channel estimating method of claim 5, wherein the spreading code is one of a Gold code and a Walsh code.

8. The channel estimating method of claim 1, wherein the pilot signal includes a synchronization code and a channel characteristic code in a time domain, the synchronization code being used to synchronize the BS and the MS, and the channel characteristic code being determined according to frequency characteristics, and includes a spreading code for channel estimation and a dependent code which is not related to channel estimation, in a frequency domain.

9. The channel estimating method of claim 8, wherein the synchronization code and the channel characteristic code are one of Gold codes or Walsh codes.

10. The channel estimating method of claim 9, wherein the spreading code and the dependent code in the frequency domain are determined by the channel characteristic code in the time domain.

11. The channel estimating method of claim 10, wherein the channel characteristic code is formed such that the signal-to-interference noise ratio of the spreading code in the frequency domain is maximized according to the signal-to-noise ratio of a given environment.

12. A pilot signal designing method in a wireless communication system in which a plurality of MSs communicate with a BS on multiple carriers, comprising the step of designing a pilot signal to have simultaneous time-domain and frequency-domain responses.

13. The pilot signal designing method of claim 12, wherein the pilot signal includes a synchronization code and a channel characteristic code in a time domain, the synchronization code being used to synchronize the BS and an MS, and the channel characteristic code being determined according to frequency characteristics, and includes a spreading code for channel estimation and a dependent code which is not related to channel estimation, in a frequency domain.

14. The pilot signal designing method of claim 13, wherein the synchronization code and the channel characteristic code are orthogonal codes.

15. The pilot signal designing method of claim 13 or 14, wherein the spreading code and the dependent code are one of Gold codes or Walsh codes.

16. The pilot signal designing method of one of claims 13 to 15, wherein the spreading code and the dependent code are determined by the channel characteristic code in the time domain.

17. The pilot signal designing method of claim 16, wherein the channel characteristic code maximizes the signal-to-interference noise ratio of the spreading code in the frequency domain according to the signal-to-noise ratio of a given environment.

18. A receiver in a BS that estimates a channel for each of a plurality of MSs using pilot signals received from the MSs in a multicarrier code division multiple access system, comprising:

   a plurality of correlators for separating a pilot signal for each of the MSs;
   a maximum value detector for feeding back a highest of outputs of the correlators as timing information to an MS corresponding to the highest value; and
   a channel estimator for estimating a channel for each of the MSs by despreading the pilot signal.

19. The receiver of claim 18, wherein the correlators are matched filters.

20. The receiver of claim 18, wherein the correlators are active correlators.

21. The receiver of one of claims 18 to 20, wherein the channel estimator is arranged for despreading the pilot signal by a combining technique, for channel estimation.

EP 1 555 782 A2

FIG.1

FIG.2

```
                              ┌─────────────┐
                              │    Start    │
                              └──────┬──────┘
                                     │
                              ┌──────▼──────┐
                              │   Prev=0    │ ─── S301
                              │    r_w=0    │
                              └──────┬──────┘
                                     │
        ┌────────────────────────────┤
        │                     ┌──────▼──────────┐
        │                     │ r_w = r_w + Step Size │ ─── S303
        │                     └──────┬──────────┘
        │                            │
 ┌──────┴──────────┐          ┌──────▼──────────┐
 │ Prev = SINR_CE  │          │ Calculate SINR_CE │ ─── S305
 └──────┬──────────┘          └──────┬──────────┘
  S308  │                            │
        │         Yes        ┌───────▼────────┐
        └────────────────────┤ SINR_CE > Prev │ ─── S307
                             └───────┬────────┘
                                     │ No
                              ┌──────▼──────┐
                              │  Output r_w │ ─── S309
                              └──────┬──────┘
                                     │
                              ┌──────▼──────┐
                              │     End     │
                              └─────────────┘
```

# FIG.3

FIG.4

EP 1 555 782 A2

EP 1 555 782 A2

$$H_1 = (H_{11}, H_{12}, H_{13}, ..., H_{1P})$$

$$H_2 = (H_{21}, H_{22}, H_{23}, ..., H_{2P})$$

$$H_K = (H_{K1}, H_{K2}, H_{K3}, ..., H_{KP})$$

FIG.5